# EUROPEAN PATENT APPLICATION

(11) **EP 2 267 076 A1**
(43) Date of publication of application: **29.12.2010**
(21) Application number: 09173353.5
(22) Date of filing: 16.10.2009
(51) Int. Cl.: C08L 67/02, B29D 12/02, G02C 5/00

(54) **Method for making polyethylene terephthalate glass and sunglass frames**

(30) Priority: 25.06.2009 IT MI20091121
(71) Applicant: Plastodidattica Commerciale S.r.L., 32040 Lozzo di Cadore (BL) (IT)
(72) Inventor: De Bon, Giovanni, I-32040, Lozzo di Cadore (BL) (IT); Sanna, Sergio, I-32040, Lozzo di Cadore (BL) (IT)
(74) Representative: Cicogna, Franco

(57) **Abstract**

A method for making polyethylene terephthalate glass and sunglass frames comprises a preliminary step of dehumidifying the polyethylene terephthalate (PET) material while water refrigerating the injection mold.

## Description

### BACKGROUND OF THE INVENTION

The present invention relates to a method for making polyethylene terephthalate glass and sunglass frames.

More specifically, the invention relates to such a glass frame making method also allowing to use derivative materials of the original polymer or PET material, such as, for example, PET-G - A-PET - PET-P, as well as all material variations containing additives or fibers either of a mineral or a non mineral nature.

As is known, plastic material glass frames are conventionally made by injection methods, in which a plastic material, brought to a semiliquid status, is injected into a suitable mold.

At present, raw materials used in the above injection method comprise cellulose propionate or nylon PA12.

However, cellulose propionate, while having a comparatively low cost, does not have satisfactory technical characteristics.

On the other hand, nylon PA12, while having technical high characteristics, has a very high cost.

### SUMMARY OF THE INVENTION

Accordingly, the aim of the present invention is to provide such a method allowing to make high quality and inexpensive glass frames.

According to one aspect of the present invention, the above aim, as well as yet other objects, which will become more apparent hereinafter, are achieved by a method for making glass frames, **characterized in that** said method uses, as a raw material therefor, polyethylene terephthalate (PET).

Polyethylene terephthalate, as is known, has a very high mechanical strength and ductility, and a comparatively low cost.

PET is a material of the polyester family, and is a thermoplastic resin which, as it is brought to a melting condition at a given temperature, may be injected into a mold for providing, upon cooling, the desired finished articles of manufactures.

Said PET has several advantageous qualities, such as, for example, a good clearness, a high impact resistance as well as a very good chemical resistance, thereby it can also be used for food article applications.

A particularly advantageous features of PET is that it can be easily recycled, to provide recycled articles, even for food applications.

Actually, if properly transformed, PET is a fully re-usable material.

The method for transforming PET to make it suitable for forming glass frames, according to the present invention, allows to easily make high quality and inexpensive glass frames, by using existing apparatus which, as they are interfaced with one another, transform the starting polymer from a solid form to a semiliquid form thereof, to be molded in a refrigerated injection mold to provide a finished stable glass frame.

This polymer can be used in the form of semicrystalline polymer grains, which, because of their nature, absorb a comparatively high amount of moisture from their encompassing environment, which moisture must be removed from the grains, since it would cause the polymer to assume a molten status negatively affecting the finished article, by rendering said article very sensible to breakages.

For example, for making satisfactory glasses, the molten PET material must have a moisture rate less than 0.4%, and, to achieve this moisture rate, the polymer is processed, according to the invention, in a dehumidifying device comprising a thermally insulated heating vessel, in which environment air is filtered through mineral filters and conveyed through the PET grains, thereby removing therefrom the most part of their moisture, to bring the latter to the desired level.

Preferably, the dehumidifying device operate in a temperature range varying from about 60°C to 190°C, with an air flow rate from 5 to 29 Nm³/h, depending on a starting value thereof.

The dehumidified PET grains can be further processed by additional processing steps providing to use an injection press for transforming the dehumidified PET grains from a solid status to a molten status and to forcibly inject the polymer into a mold.

Said press, by a heated injection screw assembly, advantageously heated by electrical resistances, will load by its rotary movement a molten polymer set amount in a plasticizing cylinder.

Depending on the PET type being used, the temperature of the press cylinder is adjusted to a value from 160°C to 300°C.

Upon achieving the set temperature, the molten polymer is injected into a mold to provide any desired pattern glass frames.

During the injection process, it is preferable to properly control and calibrate the injection step injection time, speed and pressure, so as not to degrade or excessively stress the polymer being injected.

In this step, the molten PET, will press from its starting crystalline opaque and brittle form to an amorphous form which is a transparent and mechanically strong one.

Said amorphous form, in particular, is set by a very strong and quick cooling of the mold inside.

To achieve a proper defect free transforming it is preferable, according to the invention, to hold the mold temperature at a very low level.

To that end, inside the mold are advantageously provided a cooling coil covering all the surface of the workpiece being molded and a cooling fountain adapted to hold the high temperature injection point at a PET ideal temperature.

The refrigerating fluid is preferably refrigerating water adapted to properly refrigerate the mold.

Advantageously, said refrigerating fluid or water is circulated through a closed circulating loop, controlled by a refrigerating control unit adapted to hold the fluid temperature at such a level as to provide, in the mold, a temperature value from about 2°C to 35°C, thereby providing a finished glass frame having very good clearness properties.

It has been found that the invention fully achieves the intended aim and objects.

In fact, the invention provides a method for making glass and sunglass frames starting from a terephthalate polyethylene, either of a virgin or of a regenerated nature, in all its possible variations.

The method provides to preliminarily dehumidifying terephthalate polyethylene at a temperature from 60°C to 190°C, with an air flow rate from 5 to 29 Nm³/h, and a molten PET moisture less than 0.4%, thereby allowing the polymer to be transformed without degrading it, said transforming being carried out by injecting the polymer into an injection press cylinder having a temperature from 160°C to 300°C.

According to the present invention, the mold is preferably made of a steel, aluminium or any other suitable material, adapted to mold the polymer while forcibly cooling its overall surface, by using a further central cooling fountain or injection core.

The mold, temperature being preferably varied from 5°C to 50°C.

Moreover, the method according to the invention provides to proper refrigerate the mold by a water refrigerating unit or any other systems designed for lowering the refrigerating water temperature to such a level as to hold the mold temperature within preset temperature parameters.

Thus, by holding all the molding set parameters at a constant value, it is possible to provide a glass frame including a glass front portion and glass arms having a very good clearness, but which, if desired, can also be colored, painted or decorated at will.

## Claims

1. A method for making glass and sunglass frames, **characterized in that** said method comprises the step of molding a raw polyethylene terephthalate (PET) polymer or derivatives thereof (PET-G - A-PET - PET-P), as well as variations thereof including additives or fibers either of a mineral or non mineral nature.

2. A method according to claim 1, **characterized in that** said method comprises a step of preliminarily dehumidifying said polyethylene terephthalate.

3. A method according to claim 2, **characterized in that** said dehumidifying step is carried out at a temperature from 60°C to 190°C, an air flow rate from 5 to 29 Nm³/h, and a molten PET moisture of 0.4%, thereby transforming said polymer without degrading it.

4. A method according to claim 1, **characterized in that** said method comprises an injection step carried out in an injection press cylinder having a temperature from 160°C to 300°C.

5. A method according to claim 1, **characterized in that** said method comprises an injection step carried out in a steel or aluminium mold adapted to injection mold said polymer and forcibly cool an overall molding surface thereof by using a central cooling fountain or injection core means.

6. A method according to claim 5, **characterized in that** said mold has a temperature varying from 5°C to 50°C.

7. A method according to claim 5, **characterized in that** said method comprises a step of water refrigerating said mold to hold a set temperature in said mold.
